# FASCICULE DE BREVET EUROPEEN

(11) **EP 2 118 471 B1**
(45) Date de publication et mention de la délivrance du brevet: **27.06.2012**
(21) Numéro de dépôt: 08762092.8
(22) Date de dépôt: 14.02.2008
(51) Int. Cl.: F02C 7/045

(54) **REVÊTEMENT POUR LE TRAITEMENT ACOUSTIQUE INTEGRANT LA FONCTION DE TRAITEMENT DU GIVRE AVEC DE L'AIR CHAUD**
BESCHICHTUNG FÜR SCHALLBEHANDLUNG MIT FUNKTION ZUR VEREISUNGSBEHANDLUNG MIT HEISSLUFT
COATING FOR ACOUSTIC TREATMENT HAVING A HOT AIR ICING PROCESSING FUNCTION

(30) Priorité: 20.02.2007 FR 0753358
(43) Date de publication de la demande: 18.11.2009
(73) Titulaire: Airbus Opérations SAS, 31060 Toulouse (FR)
(72) Inventeur: FRUSTIE, Valérie, F-31200 Toulouse (FR); DUPRIEU, Bernard, F-31200 Toulouse (FR); GANTIE, Fabrice, F-31000 Toulouse (FR)
(74) Mandataire: Fantin, Laurent
(86) Numéro de dépôt international: PCT/FR2008/050244
(87) Numéro de publication internationale: WO 2008/104714

(56) Documents cités:
- EP-A- 1 495 963
- EP-A1- 1 232 944
- FR-A- 2 887 518
- US-A- 3 933 327
- US-A1- 2003 031 556
- US-A1- 2006 219 475

## Description

La présente invention se rapporte à un revêtement pour le traitement acoustique intégrant la fonction de traitement du givre avec de l'air chaud, ledit revêtement étant destiné notamment à un bord d'attaque d'aéronef, et plus particulièrement à une entrée d'air d'une nacelle d'aéronef.

Pour limiter l'impact des nuisances sonores à proximité des aéroports, les normes internationales sont de plus en plus contraignantes en matière d'émissions sonores.

Des techniques ont été développées pour réduire le bruit émis par un aéronef, notamment en disposant, au niveau des parois des conduits des nacelles, des revêtements visant à absorber une partie de l'énergie sonore, notamment en utilisant le principe des résonateurs d'Helmholtz. De manière connue, ce revêtement acoustique comprend de l'extérieur vers l'intérieur une couche poreuse acoustiquement résistive, une structure alvéolaire et une couche réflectrice imperméable aux ondes sonores pour que le revêtement soit efficace. Pour l'instant, en raison de différentes contraintes, par exemple de mise en forme ou de compatibilité avec d'autres équipements, l'étendue des surfaces traitées est limitée. Ainsi , le revêtement est difficilement compatible avec les systèmes permettant d'éviter la formation et/ou l'accumulation de glace et/ou de givre qui sont nécessaires dans ces zones.

Ces systèmes sont divisés en deux grandes familles, les premiers appelés systèmes anti-givrants permettant de limiter la formation de la glace et/ou du givre, les seconds appelés systèmes dégivrants limitant l'accumulation de la glace et/ou du givre et agissant une fois la glace et/ou le givre formé. Pour la suite de la description, on entend par système ou procédé de traitement du givre, un système ou un procédé anti-givrant ou un système ou un procédé dégivrant.

La présente invention se rapporte plus particulièrement à un procédé de traitement du givre consistant à utiliser de l'air chaud prélevé au niveau du moteur et refoulé au niveau de la paroi interne des bords d'attaque. Ce système performant est difficilement compatible avec le revêtement de traitement acoustique dans la mesure où ce dernier est relativement épais et constitué de cellules contenant de l'air agissant comme un isolant.

Afin de tenter de rendre les traitements acoustiques et du givre compatibles, une solution décrite dans les documents EP-1.103.462, US-3 933 327 et US-5.841.079 prévoit des trous dans la paroi réflectrice afin que l'air chaud pénètre dans les cellules du revêtement acoustique.

Cependant cette solution n'est pas satisfaisante pour les raisons suivantes :
Les cellules de la structure alvéolaire comportant au niveau de la couche réflectrice un ou plusieurs trous sont moins performantes en matière de traitement acoustique, les ondes se dissipant moins bien dans lesdites cellules.
Pour réduire cette altération, une solution consiste à réduire la section des trous. Dans ce cas, le volume d'air à débit constant est réduit, rendant moins efficace le dégivrage. Par ailleurs, ces trous de sections réduites peuvent se boucher plus facilement, ce qui annule dans la zone correspondante la fonction de dégivrage.

Selon une autre problématique, dans la mesure où la structure alvéolaire constituée d'un nid d'abeilles est déformée lors de sa mise en place, certains trous de la couche réflectrice peuvent être disposés au droit d'une paroi latérale délimitant deux alvéoles. Dans ce cas, le fonctionnement en matière de traitement acoustique de deux alvéoles est altéré et la fonction de dégivrage est également altérée, le trou étant partiellement obturé par la paroi.

Enfin, selon une autre problématique, un équilibre de pression se formant à l'intérieur de la lèvre d'entrée d'air, il n'est pas possible d'isoler certaines parties de la lèvre afin d'y insuffler une pression d'air de dégivrage plus forte, notamment aux endroits où le givre se dépose en plus grande quantité.

La présente invention vise à pallier aux inconvénients de l'art antérieur en proposant un revêtement rendant compatible le traitement acoustique et le traitement du givre avec un gaz chaud, ledit revêtement étant destiné notamment à un bord d'attaque et plus particulièrement une entrée d'air de nacelle.

A cet effet, l'invention a pour objet un revêtement pour le traitement acoustique rapporté au niveau d'une surface d'un aéronef, notamment au niveau d'un bord d'attaque tel qu'une entrée d'air d'une nacelle d'aéronef, ledit revêtement comprenant une couche acoustiquement résistive, au moins une structure alvéolaire et une couche réflectrice, ladite structure alvéolaire comprenant une pluralité de conduits débouchant d'une part au niveau d'une première surface imaginaire, et d'autre part, au niveau d'une seconde surface imaginaire, caractérisé en ce que la structure alvéolaire comprend des découpes ou des orifices ménagés au niveau des parois latérales de certains conduits permettant de faire communiquer des conduits adjacents de manière à créer un réseau de conduits communicants isolant au moins un conduit ou un groupe de conduits non communicants, au moins l'un des conduits communicants étant reliés à au moins une arrivée de gaz chaud.

Selon l'invention, certaines cellules du revêtement sont exclusivement dédiées au traitement acoustique et ne comprennent aucun orifice en dehors de la couche acoustiquement résistive.

D'autres caractéristiques et avantages ressortiront de la description qui va suivre de l'invention, description donnée à titre d'exemple uniquement, en regard des dessins annexés sur lesquels :
- la figure 1 est une vue en perspective d'un ensemble propulsif d'un aéronef,
- la figure 2 est une coupe longitudinale illustrant une entrée d'air d'une nacelle selon l'invention,
- la figure 3 est une vue de dessus d'une structure alvéolaire selon une première variante de l'invention,
- la figure 4 est une vue de dessus d'une structure alvéolaire selon une autre variante de l'invention,
- la figure 5 est une vue en élévation illustrant une bande longitudinale disposée dans un plan radial,
- la figure 6A est une vue en élévation illustrant une première bande transversale disposée selon une première surface sécante aux plans radiaux,
- la figure 6B est une vue en perspective illustrant en perspective la première bande illustrée sur la figure 6A,
- la figure 7A est une vue en élévation illustrant une deuxième bande transversale disposée selon une deuxième surface sécante aux plans radiaux, ladite deuxième surface suivant la partie sommitale de la lèvre d'une entrée d'air de nacelle,
- la figure 7B est une vue en perspective illustrant la deuxième bande illustrée sur la figure 7A qui peut être courbée pour s'imbriquer dans les premières bandes,
- la figure 8 est une vue en perspective selon un premier angle de vue illustrant une structure alvéolaire selon l'invention susceptible d'être adaptée à un secteur angulaire d'une entrée d'air,
- la figure 9 est une vue en perspective illustrant en détails la liaison entre une bande longitudinale et une bande transversale,
- la figure 10 est une vue en perspective selon un deuxième angle de vue illustrant une structure alvéolaire selon l'invention susceptible d'être adaptée à un secteur angulaire d'une entrée d'air, et
- la figure 11 est une vue en perspective illustrant en détails une arrivée d'air.

La présente invention est maintenant décrite appliquée à une entrée d'air d'un ensemble propulsif d'un aéronef. Cependant, elle peut s'appliquer au niveau des différents bords d'attaque d'un aéronef au niveau desquels un traitement acoustique et un traitement du givre sont opérés, par exemple le bord d'attaque des ailes.

Pour la suite de la description, on entend par givre aussi bien le givre que la glace, de toutes natures, de toutes structures et de toutes les épaisseurs.

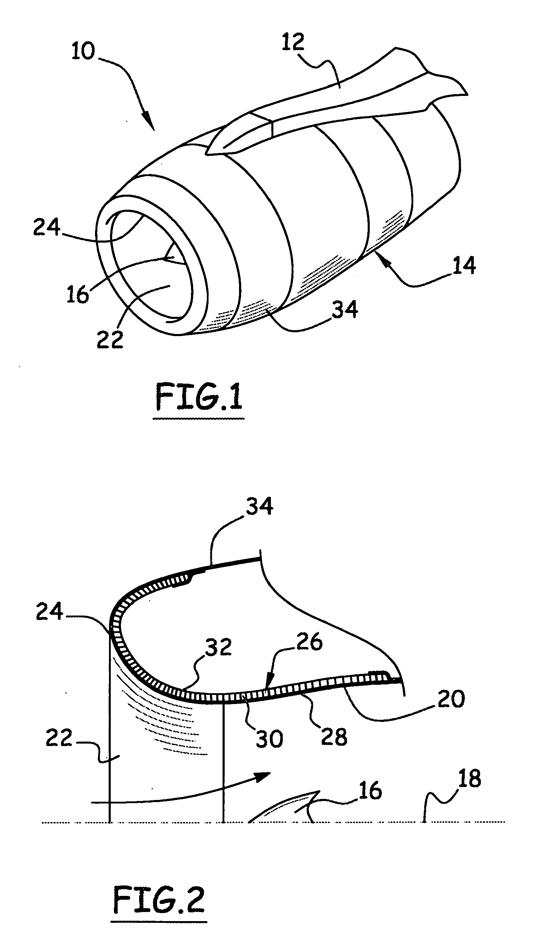

Sur la figure 1, on a représenté un ensemble propulsif 10 d'un aéronef relié sous la voilure par l'intermédiaire d'un mât 12. Toutefois, cet ensemble propulsif pourrait être relié à d'autres zones de l'aéronef.

Cet ensemble propulsif comprend une nacelle 14 dans laquelle est disposée de manière sensiblement concentrique une motorisation entraînant une soufflante montée sur son arbre 16. L'axe longitudinal de la nacelle est référencé 18.

La nacelle 14 comprend une paroi intérieure 20 délimitant un conduit avec une entrée d'air 22 à l'avant.

La partie sommitale 24 de l'entrée d'air 22 décrit une forme sensiblement circulaire qui s'étend dans un plan qui peut être sensiblement perpendiculaire à l'axe longitudinal 18, comme illustré sur la figure 2, ou non perpendiculaire, avec la partie sommitale située à 12h légèrement avancée. Toutefois, d'autres formes d'entrée d'air peuvent être envisagées.

Pour la suite de la description, on entend par surface aérodynamique l'enveloppe de l'aéronef en contact avec le flux aérodynamique.

Pour limiter l'impact des nuisances, un revêtement 26 visant à absorber une partie de l'énergie sonore, notamment en utilisant le principe des résonateurs d'Helmholtz est prévu notamment au niveau des surfaces aérodynamiques. De manière connue, ce revêtement acoustique, également appelé panneau acoustique, comprend de l'extérieur vers l'intérieur une couche acoustiquement résistive 28, au moins une structure alvéolaire 30 et une couche réflectrice 32

Par couche, on entend une ou plusieurs couches de même nature ou non.

La couche acoustiquement résistive 28 est une structure poreuse ayant un rôle dissipatif, transformant partiellement l'énergie acoustique de l'onde sonore la traversant en chaleur.

La couche réflectrice 32 est imperméable aux ondes sonores et ne comprend aucun orifice susceptible d'affecter le traitement acoustique.

Ces différentes couches ne sont pas plus décrites car elles sont connues de l'homme du métier.

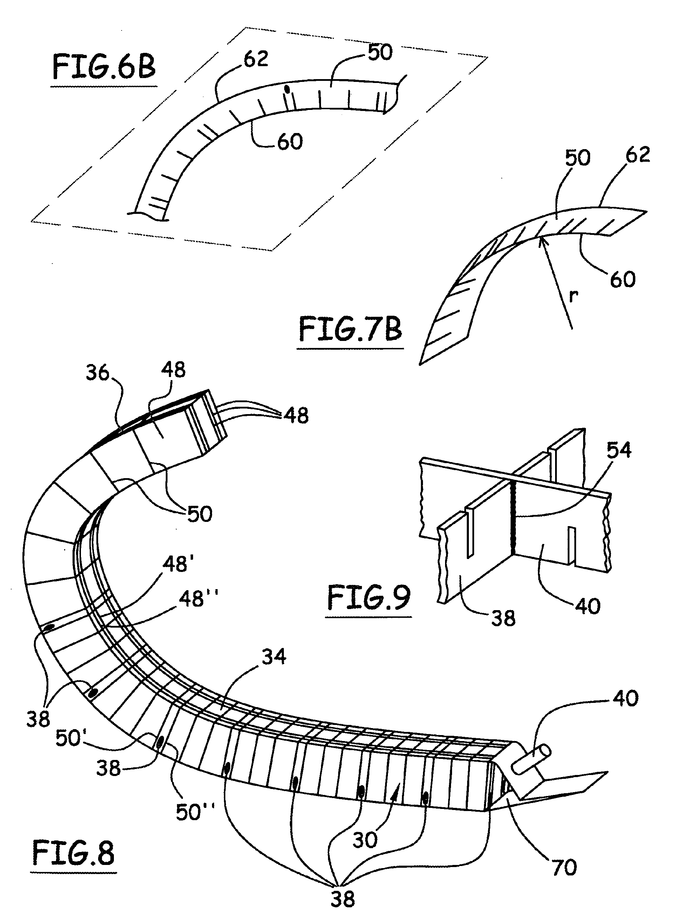

La structure alvéolaire 30 correspond à un volume délimité par d'une part une première surface imaginaire 34 sur laquelle peut être rapportée la couche réflectrice 32, et d'autre part, une seconde surface imaginaire 36 sur laquelle peut être rapportée la couche acoustiquement résistive 28, comme illustré sur la figure 8.

La distance séparant la première surface imaginaire 34 et la seconde surface imaginaire 36 peut ne pas être constante. Ainsi cette distance peut être plus importante au niveau de la lèvre de l'entrée d'air afin de conférer à ladite structure une plus grande résistance notamment aux chocs.

La structure alvéolaire 30 comprend une pluralité de conduits débouchant d'une part au niveau de la première surface, et d'autre part, au niveau de la seconde surface. Ces conduits sont obturés par d'une part la couche poreuse acoustiquement résistive, et d'autre part, la couche réflectrice de manière à former une cellule.

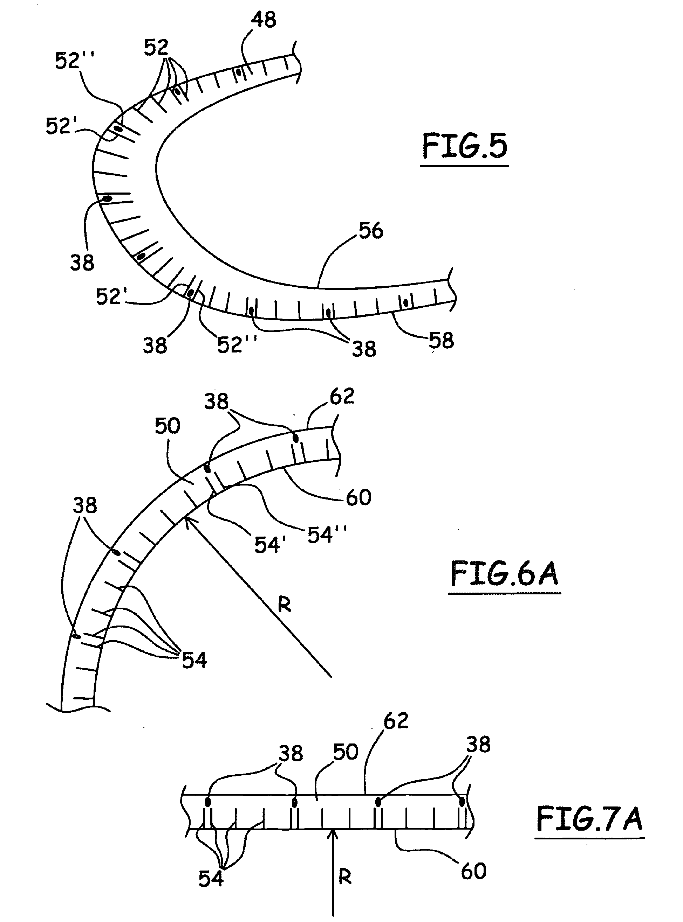

De préférence, deux conduits adjacents sont séparés par une paroi latérale. Pour réduire encore les nuisances sonores, l'entrée d'air 22 comprend un revêtement acoustique 26 sur au moins une partie de la surface aérodynamique. Selon un mode de réalisation, ce revêtement acoustique 26 s'étend de la paroi intérieure 20 de la nacelle jusqu'à la partie sommitale 24 de l'entrée d'air sur toute la périphérie de l'entrée d'air. De préférence, comme illustré sur les figures 2 et 6, le revêtement acoustique 26 s'étend au-delà de la partie sommitale 24 de l'entrée d'air, et recouvre une partie de la surface extérieure 34 de la nacelle.

Pour limiter la formation du givre ou éviter son accumulation, l'entrée d'air 22 comprend des moyens pour traiter le givre.

La présente invention se rapporte plus précisément à un procédé de traitement du givre consistant à utiliser de l'air chaud prélevé au niveau du moteur et refoulé au niveau de la paroi interne de la surface aérodynamique.

Selon l'invention, la structure alvéolaire 30 comprend des découpes ou des orifices 38 ménagés au niveau des parois latérales de certains conduits permettant de faire communiquer des conduits adjacents de manière à créer un réseau de conduits communicants isolants au moins un conduit ou un groupe de conduits non communicants. En complément, la structure alvéolaire comprend au moins une arrivée d'un gaz chaud 40 au niveau du flan de la structure alvéolaire. Selon un mode de réalisation, la structure alvéolaire comprend des découpes au niveau de certains bords des parois latérales susceptibles d'être disposés au niveau de la seconde surface imaginaire 36 revêtue par la couche acoustiquement résistive.

Ainsi, contrairement à l'art antérieur, la structure alvéolaire conserve des cellules non communicantes entre elles avec une seule surface perméable aux ondes sonores, celle revêtue de la couche acoustiquement résistive. Ainsi, le fonctionnement de ces cellules non communicantes entre elles n'est pas altéré par le traitement du givre, la couche réflectrice restant imperméable.

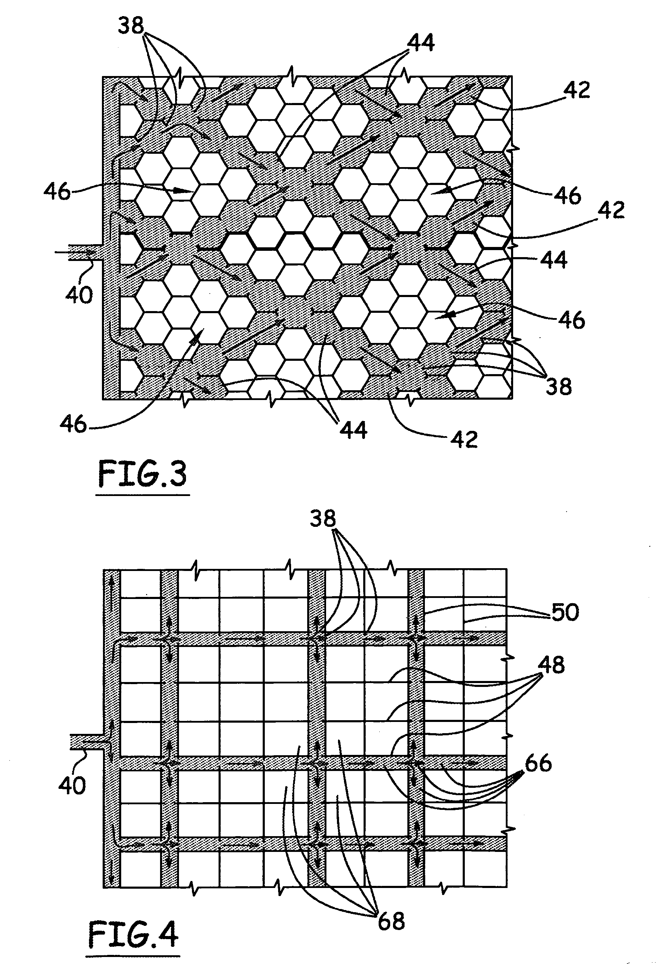

Selon un premier mode de réalisation illustré sur la figure 3, la structure alvéolaire 30 est constituée d'un nid d'abeilles. Ainsi, les conduits ont une forme hexagonale et les conduits adjacents sont séparés par des parois latérales. Selon l'invention, les conduits disposés selon certaines diagonales sont communicants grâce à des découpes ou orifices 38. De préférence, les conduits sont communicants selon des premières diagonales 42 orientées selon une première direction et selon des deuxièmes diagonales 44 orientées selon une deuxième direction. Cette configuration permet d'isoler des groupes 46 de conduits non communicants entre eux via leurs parois latérales. A titre d'exemple, les conduits communicants, illustrés en grisés sur la figure 3, permettent d'isoler neuf conduits non communicants.

Selon une autre variante illustrée sur les figures 4, 5, 6A, 6B, 7A, 7B, 8 à 11, la structure alvéolaire 30 comprend d'une part une pluralité de premières bandes 48 dites bandes longitudinales correspondant à l'intersection du volume avec des plans radiaux incorporant l'axe longitudinal 18, et d'autre part, une pluralité de secondes bandes 50 dites bandes transversales correspondant à l'intersection du volume avec des surfaces sécantes aux plans radiaux. De préférence, au niveau de chaque point d'intersection avec la seconde surface imaginaire 36, chaque bande transversale 50 est sensiblement perpendiculaire à la tangente à la seconde surface imaginaire 36 au point considéré.

De préférence, au niveau de chaque point d'intersection avec les bandes transversales 50, chaque bande longitudinale 48 est sensiblement perpendiculaire à la tangente de chaque bande transversale 50 au point considéré.

Par surface sécante, on entend un plan ou une surface qui est sécant avec la première surface imaginaire 34 et avec la seconde surface imaginaire 36.

De manière plus générale, la structure alvéolaire comprend une série de premières bandes 48 disposées au niveau de surfaces sécantes, lesdites premières bandes 48 étant non sécantes entre elles et espacées entre elles, et au moins une deuxième série de deuxièmes bandes 50 disposées au niveau de surfaces sécantes, lesdites deuxièmes bandes 50 étant non sécantes entre elles et espacées entre elles. Les premières bandes 48 sont sécantes avec les deuxièmes bandes de manière à délimiter un conduit entre d'une part deux premières bandes adjacentes et d'autre part deux deuxièmes bandes adjacentes. Ainsi, on obtient des conduits avec quatre faces latérales.

De même, pour simplifier la conception, on disposera les premières bandes dans des plans radiaux contenant l'axe longitudinal de la nacelle.

Pour obtenir une structure plus rigide, on disposera les secondes bandes de manière à ce qu'elles soient sensiblement perpendiculaires aux premières bandes afin d'obtenir des conduits avec des sections carrées ou rectangulaires. Cette solution permet également de simplifier la conception. Cependant, d'autres formes de section sont envisageables, par exemple en forme de losange.

Au niveau des zones courbes, les sections des conduits sont évolutives. Ainsi, ils varient entre une section importante au niveau de la seconde surface imaginaire 36 et une section plus réduite au niveau de la première surface imaginaire 34.

Pour assembler les bandes des différentes séries qui s'entrecroisent, on prévoit des premières découpes 52 au niveau des bandes longitudinales 48 qui coopèrent avec des secondes découpes 54 au niveau des bandes transversales 50. On comprend qu'il suffit d'augmenter le nombre de découpes sur chacune des bandes dans le cas d'un nombre de séries de bandes supérieur à deux.

Les premières et secondes découpes 52 et 54 ne s'étendent pas d'un bord à l'autre pour faciliter l'assemblage.

La longueur des premières découpes 52 et celle des secondes découpes 54 sont ajustées de manière à ce que les bords des bandes longitudinales et transversales soient disposés au niveau des surfaces imaginaires 34 et 36.

Selon un mode de réalisation, les premières découpes 52 s'étendent à partir du bord des bandes longitudinales disposé au niveau de la seconde surface imaginaire 36. En complément, les secondes découpes 54 s'étendent à partir du bord des bandes transversales disposé au niveau de la première surface imaginaire 34.

Selon un mode de réalisation, on numérise la forme de la structure alvéolaire 30 qu'elle aura lorsqu'elle sera en place au niveau de la surface à traiter. On positionne alors de manière virtuelle les bandes longitudinales et transversales afin de définir pour chacune d'elles leurs géométries. On peut discrétiser la surface selon la même méthode que les logiciels de maillage. La discrétisation de la surface s'effectue par projection des géométries.

Ainsi, comme illustré sur la figure 5, dans le cas d'une entrée d'air, les bandes longitudinales 48 ont une forme en C avec un premier bord 56 susceptible de correspondre avec la première surface imaginaire 34 et un second bord 58 susceptible de correspondre avec la seconde surface imaginaire 36. Selon les variantes, la distance séparant les bords 56 et 58 peut varier d'une bande à l'autre ou le long du profil d'une même bande. Les bandes longitudinales 48 sont découpées dans des plaques sensiblement planes. Cette découpe à plat simplifie la fabrication. Dans la mesure où les bandes longitudinales 48 sont disposées dans des plans radiaux, elles ne sont pas courbées lors de l'assemblage avec les bandes transversales 50.

Comme illustré sur les figures 6A, 6B, 7A et 7B, dans le cas d'une entrée d'air, les bandes transversales 50 ont des formes en anneaux avec un premier bord 60 susceptible de correspondre avec la première surface imaginaire 34 et un second bord 62 susceptible de correspondre avec la seconde surface imaginaire 36. Les bords 60 et 62 ont un rayon de courbure susceptible de varier progressivement en fonction de l'éloignement avec la partie sommitale 24, depuis une valeur R correspondant sensiblement au rayon de courbure du conduit formant la nacelle pour les bandes transversales 50, comme illustré sur la figure 6A, et un rayon infini, les bords 60 et 62 étant sensiblement rectilignes, comme illustré sur la figures 7A, pour la bande transversale 50 disposée au niveau de la partie sommitale 24 de l'entrée d'air.

Les bandes transversales 50 sont de préférence découpées dans des plaques sensiblement planes.

Un avantage de l'invention réside dans le fait que les bandes transversales et longitudinales sont découpées à plat ce qui contribue à simplifier la fabrication et qu'elles ne subissent aucune opération de formage ce qui garantit l'ajustage des cellules sur la couche réflectrice et la couche acoustiquement résistive.

Les bandes transversales, en fonction de leur position, sont suffisamment souples pour pouvoir être éventuellement courbées afin de s'imbriquer dans les bandes longitudinales. Comme illustré sur la figure 6B, les bandes transversales 50 disposées dans des zones de la structure alvéolaire ayant un seul rayon de courbure, notamment les parties sensiblement cylindriques, sont disposées dans des plans une fois assemblées.

La majorité des bandes transversales 50 sont suffisamment souples pour être éventuellement courbées selon un rayon de courbure r perpendiculaire à la surface des bandes, comme illustré sur la figure 7B, en fonction de leur position au niveau de la structure alvéolaire. Ainsi, les bandes transversale 50 éloignées de la partie sommitale 24 ne sont pas courbées, ce qui correspond à un rayon de courbure r infini, les bandes transversales 50 ayant un rayon de courbure r qui diminue progressivement en fonction de la distance séparant la bande transversale considérée de la partie sommitale 24 jusqu'à un rayon r sensiblement égal au rayon de la partie sommitale pour la bande transversale 50, illustrée sur les figures 7A et 7B, disposée au niveau de la partie sommitale 24. Selon un avantage important de l'invention, les bandes ne sont plus déformées une fois assemblées ou lorsque les couches réflectrice ou acoustiquement résistive sont mises en place.

Le revêtement acoustique ainsi constitué ayant des formes adaptées à celles de la surface à traiter, il n'est plus déformé lors de sa mise en place au niveau de ladite surface à traiter. Par conséquent, contrairement à l'art antérieur, la liaison entre la structure alvéolaire et la couche réflectrice ou la couche acoustiquement résistive ne risque plus d'être endommagée et la position des parois des conduits qui correspondent aux bandes est parfaitement connue et, les parois latérales restant aux positions souhaitées lors de la numérisation. Comme illustré sur la figure 9, les bandes longitudinales 48 et les bandes transversales 50 sont assemblées puis reliées entre elles par soudage, par exemple une brasure 64, ou par collage. Toutefois, d'autres solutions pour assurer une liaison entre les bandes peuvent être envisagées.

Selon les variantes, les bords des bandes peuvent avoir des formes plus complexes et comprendre plusieurs rayons de courbure afin d'obtenir des surfaces plus complexes.

Selon les cas, il est possible de faire varier l'écartement entre les bandes d'une même série.

Ainsi, les premières découpes 52' et 52" consécutives peuvent avoir un écart plus réduit afin d'obtenir un faible écartement entre les bandes transversales 50' et 50" consécutives comme illustré sur la figure 8. De même, les secondes découpes 54' et 54" consécutives peuvent avoir un écart plus réduit afin d'obtenir un faible écartement entre les bandes longitudinales 48, 48" consécutives comme illustré sur la figure 8.

Cet agencement permet d'obtenir des cellules avec des sections variables.

Selon l'invention, afin d'obtenir la fonction de traitement du givre, les bandes 48 et 50 peuvent comprendre des découpes 38 pour faire communiquer certaines cellules entre elles et obtenir un réseau de conduits. Cette solution permet de générer un réseau de conduits, prévus entre les bandes 48 et 50 consécutives rapprochées, utilisés pour acheminer de l'air chaud et obtenir la fonction de traitement du givre, comme illustré sur la figure 4.

Les cellules non communicantes sont utilisées pour la fonction du traitement acoustique.

Cette configuration permet de rendre compatibles les fonctions du traitement du givre et du traitement acoustique, certaines cellules du revêtement, celles qui ne communiquent pas entre elles, étant prévues exclusivement pour le traitement acoustique et d'autres, celles qui communiquent entre elles, pour le traitement du givre.

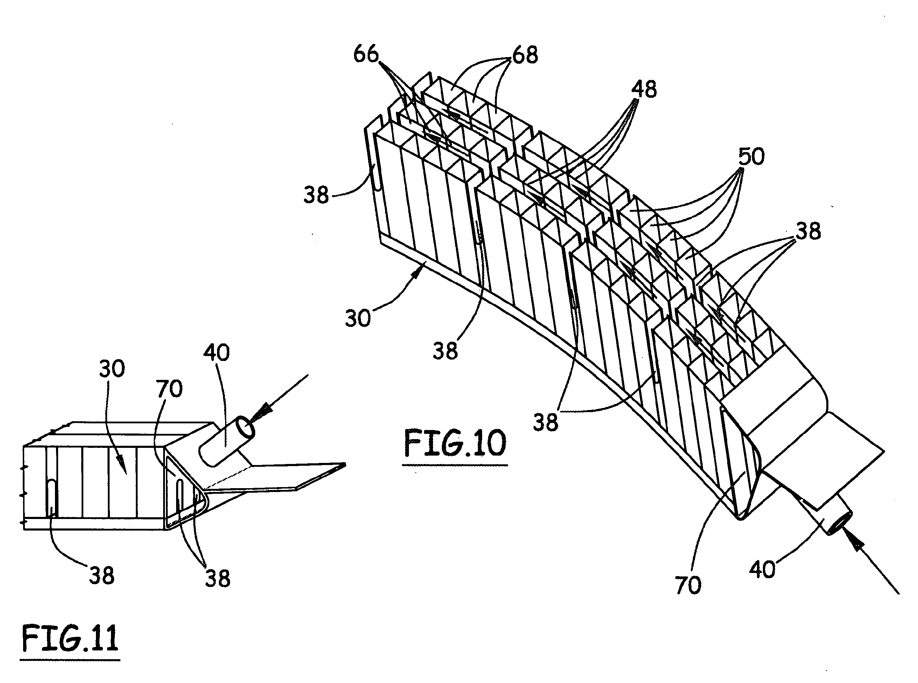

Contrairement à la solution utilisant une structure alvéolaire en nid d'abeilles, cet agencement permet d'adapter les sections des cellules en fonction de leur fonction. Ainsi, les cellules 66 dédiées à l'acheminement de l'air chaud pour le traitement du givre ont des sections réduites et elles sont délimitées par des bandes 48, 50 rapprochées alors que les cellules 68 dédiées au traitement acoustique ont des sections plus importantes. Ainsi, comme illustré sur la figure 10, la surface occupée par les cellules 66 dédiées au traitement acoustique est réduite au niveau de la seconde surface imaginaire afin de ne pas réduire la superficie des surfaces correspondant aux cellules 68 assurant le traitement acoustique.

Comme illustré sur la figure 11, une cavité ou un canal 70 dans lequel débouche au moins une arrivée de gaz chaud, notamment l'air chaud provenant de la motorisation, est prévu au niveau d'au moins une partie du pourtour de la structure alvéolaire 30 d'air 40, ledit au moins canal ou cavité 70 communicant via des orifices ou découpes 38 avec au moins une cellule 66 dédiée au traitement du givre.

Selon un autre avantage découlant du mode de réalisation illustré notamment sur la figure 10, la structure alvéolaire 30 n'étant pas déformée après l'assemblage des bandes, il n'existe aucun risque d'écrasement des conduits utilisés pour le traitement du givre contrairement à la solution en nid d'abeilles pour laquelle la déformation de manière aléatoire des parois latérales lors de la mise en place du revêtement pourrait conduire à l'écrasement de certains conduits.

Selon un autre avantage, il est possible de distribuer l'air de dégivrage de manière précise en adaptant l'écartement entre les bandes pour réduire la section de passage en fonction de l'endroit où il est nécessaire de dégivrer de manière plus importante.

De préférence, la couche 28 acoustiquement résistive prévue sur la seconde surface imaginaire peut comprendre des perforations ou des microperforations prévues pour faire communiquer l'intérieur des cellules de la structure alvéolaire avec l'extérieur. Certaines perforations ou micorperforations sont ainsi destinées au traitement acoustique et d'autres au traitement du givre. Avantageusement, au moins les perforations ou microperforations prévues pour le traitement du givre sont inclinées et ne sont pas normales à la surface extérieure de la couche acoustiquement résistive afin d'évacuer l'air chaud de manière laminaire au niveau de la surface extérieure à traiter. Cette configuration permet également de diminuer le risque d'obstruction des trous (perforations ou microperforations ), notamment par la pollution.

Bien entendu, l'invention n'est évidemment pas limitée au mode de réalisation représenté et décrit ci-dessus, mais en couvre au contraire toutes les variantes. Ainsi, la présente invention n'est pas limitée au bord d'attaque mais peut s'appliquer à tous les revêtements pour le traitement acoustique susceptible de traiter le givre avec un gaz chaud.

## Revendications

1. Revêtement pour le traitement acoustique rapporté au niveau d'une surface d'un aéronef, notamment au niveau d'un bord d'attaque tel qu'une entrée d'air d'une nacelle d'aéronef, ledit revêtement comprenant une couche acoustiquement résistive (28), au moins une structure alvéolaire (30) et une couche réflectrice (32), ladite structure alvéolaire (30) comprenant une pluralité de conduits débouchant d'une part au niveau d'une première surface imaginaire (34), et d'autre part, au niveau d'une seconde surface imaginaire (36), **caractérisé en ce que** la structure alvéolaire (30) comprend des découpes ou des orifices (38) ménagés au niveau des parois latérales de certains conduits permettant de faire communiquer des conduits adjacents de manière à créer un réseau de conduits communicants isolant au moins un conduit ou un groupe de conduits non communicants, au moins un des conduits communicants étant relié à au moins une arrivée de gaz chaud (40).

2. Revêtement pour le traitement acoustique selon la revendication 1, **caractérisé en ce que** la structure alvéolaire (30) comprend une série de premières bandes (48) non sécantes entre elles et espacées entre elles, et au moins une deuxième série de deuxièmes bandes (50) non sécantes entre elles et espacées entre elles et **en ce que** les premières bandes (48) sont sécantes avec les deuxièmes bandes (50) de manière à délimiter un conduit entre d'une part deux premières bandes (48) adjacentes et d'autre part deux deuxièmes bandes (50) adjacentes.

3. Revêtement pour le traitement acoustique selon la revendication 2, disposé au niveau d'une entrée d'air d'une nacelle d'aéronef, **caractérisé en ce que** les premières bandes dites longitudinales sont disposées dans des plans radiaux contenant l'axe longitudinal (18) de la nacelle.

4. Revêtement pour le traitement acoustique selon la revendication 2 ou 3, **caractérisé en ce que** chaque seconde bande (50) dite bande transversale est sensiblement perpendiculaire à la tangente à la seconde surface imaginaire (36).

5. Revêtement pour le traitement acoustique selon la revendication 3 ou 4, **caractérisé en ce que** chaque bande longitudinale (48) est sensiblement perpendiculaire à la tangente de chaque bande transversale (50).

6. Revêtement pour le traitement acoustique selon l'une quelconque des revendications 2 à 5, **caractérisé en ce que** les bandes longitudinales (48) comprennent des premières découpes (52) qui coopèrent avec des secondes découpes (54) prévues au niveau des bandes transversales (50).

7. Revêtement pour le traitement acoustique selon l'une quelconque des revendications 2 à 6, **caractérisé en ce qu'**il comprend d'une part des premières cellules (66) dédiées à l'acheminement de l'air chaud pour le traitement du givre avec des sections réduites, délimitées par des bandes (48, 50) rapprochées, et des secondes cellules (68) dédiées au traitement acoustique avec des sections plus importantes, délimitées par des bandes (48, 50) avec un espacement plus important que celui des bandes (48, 50) délimitant les premières cellules.

8. Revêtement pour le traitement acoustique selon l'une quelconque des revendications précédentes, **caractérisé en ce qu'**il comprend un cavité ou un canal (70), relié à une arrivée de gaz chaud (40), disposé au niveau d'une partie du pourtour de la structure alvéolaire, susceptible de communiquer avec au moins une cellule (68) dédiée à l'acheminement du gaz chaud.

9. Bord d'attaque d'un aéronef incorporant un revêtement pour le traitement acoustique selon l'une quelconque des revendications précédentes.

10. Entrée d'air d'une nacelle d'un aéronef incorporant un revêtement pour le traitement acoustique selon l'une quelconque des revendications 1 à 8.

## Claims

1. Coating for acoustic treatment relative to an aircraft's surface, in particular a leading edge such as an air intake of an aircraft nacelle, whereby said coating comprises an acoustically resistive layer (28), at least one alveolar structure (30), and a reflective layer (32), whereby said alveolar structure (30) comprises a number of tubes that empty out, on the one hand, at a first imaginary surface (34), and, on the other hand, at a second imaginary surface (36), **characterized in that** the alveolar structure (30) comprises cut-outs or openings (38) made at the side walls of certain tubes that make it possible to link adjacent tubes so as to create a network of communicating tubes that isolate at least one tube or a group of non-communicating tubes, whereby at least one of the communicating tubes is connected to at least one hot gas intake (40).

2. Coating for acoustic treatment according to claim 1, wherein the alveolar structure (30) comprises a series of first non-secant bands (48) that are spaced apart, and at least one second series of second non-secant bands (50) that are spaced apart, and wherein the first bands (48) are secant with the second bands (50) so as to delimit a tube between, on the one hand, two first adjacent bands (48), and, on the other hand, two second adjacent bands (50).

3. Coating for acoustic treatment according to claim 2, arranged at an air intake of an aircraft nacelle, wherein the first bands called longitudinal bands are arranged in radial planes that contain the longitudinal axis (18) of the nacelle.

4. Coating for acoustic treatment according to claim 2 or 3, wherein each second band (50) called a transverse band is essentially perpendicular to the tangent at the second imaginary surface (36).

5. Coating for acoustic treatment according to claim 3 or 4, wherein each longitudinal band (48) is essentially perpendicular to the tangent of each transverse band (50).

6. Coating for acoustic treatment according to any of claims 2 to 5, wherein the longitudinal bands (48) comprise first cut-outs (52) that work with second cut-outs (54) that are provided at the transverse bands (50).

7. Coating for acoustic treatment according to any of claims 2 to 6, wherein it comprises, on the one hand, first cells (66) that are dedicated to the channeling of hot air for the treatment of frost with small cross-sections, delimited by bands (48, 50) that are brought close together, and second cells (68) that are dedicated to acoustic treatment with larger cross-sections, delimited by bands (48, 50) with a larger spacing than that of the bands (48, 50) that delimit the first cells.

8. Coating for acoustic treatment according to any of the preceding claims, wherein it comprises a cavity or a channel (70), connected to a hot gas intake (40), arranged at a portion of the periphery of the alveolar structure, able to communicate with at least one cell (68) that is dedicated to the channeling of the hot gas.

9. Leading edge of an aircraft that incorporates a coating for acoustic treatment according to any of the preceding claims.

10. Air intake of a nacelle of an aircraft that incorporates a coating for acoustic treatment according to any of claims 1 to 8.

## Patentansprüche

1. Beschichtung für die Schallbehandlung, die im Bereich der Oberfläche eines Luftfahrzeuges ausgebildet ist, insbesondere im Bereich einer Anströmkante, wie dem Lufteintritt einer Gondel eines Luftfahrzeuges, wobei die Beschichtung eine schalldämpfende Schicht (28), wenigstens eine Kammerstruktur (30) und eine reflektierende Schicht (32) aufweist, wobei die Kammerstruktur (30) eine Vielzahl von Gängen aufweist, die einerseits im Bereich einer ersten gedachten Oberfläche (34) und andererseits im Bereich einer zweiten gedachten Oberfläche (36) enden, **dadurch gekennzeichnet, dass** die Kammerstruktur (30) Ausnehmungen oder Öffnungen (38) aufweist, die im Bereich von Seitenwänden bestimmter Gänge ausgebildet sind und es ermöglichen, benachbarte Gänge derart in Verbindung zu bringen, dass ein Netz von in Verbindung stehenden Gängen gebildet ist, wobei wenigstens ein Gang oder eine Gruppe von nicht in Verbindung stehenden Gängen isoliert ist und wenigstens einer der in Verbindung stehenden Gänge an wenigstens eine Zufuhr (40) von warmen Gas angeschlossen ist.

2. Beschichtung für die Schallbehandlung nach Anspruch 1, **dadurch gekennzeichnet, dass** die Kammerstruktur (30) eine Reihe von sich untereinander nicht schneidenden und im Abstand zueinander angeordneten ersten Bändern (48) und wenigstens eine zweite Reihe von sich untereinander nicht schneidenden und im Abstand zueinander angeordneten zweiten Bändern (50) aufweist und dass sich die ersten Bänder (48) mit den zweiten Bändern (50) derart schneiden, dass einerseits zwei benachbarte erste Bänder (48) und andererseits zwei benachbarte zweite Bänder (50) einen Gang begrenzen.

3. Beschichtung für die Schallbehandlung nach Anspruch 2, die im Bereich des Lufteintritts der Gondel eines Luftfahrzeuges angeordnet ist, **dadurch gekennzeichnet, dass** die sogenannten längslaufenden ersten Bänder in radialen Ebenen angeordnet sind, die die Längsachse (18) der Gondel enthalten.

4. Beschichtung für die Schallbehandlung nach Anspruch 2 oder 3, **dadurch gekennzeichnet, dass** jedes sogenannte querlaufende zweite Band (50) im Wesentlichen im rechten Winkel zur Tangente der zweiten gedachten Oberfläche (36) verläuft.

5. Beschichtung für die Schallbehandlung nach Anspruch 3 oder 4, **dadurch gekennzeichnet, dass** jedes längslaufende Band (48) im Wesentlichen im rechten Winkel zur Tangente von jedem querlaufenden Band (50) verläuft.

6. Beschichtung für die Schallbehandlung nach einem der Ansprüche 2 bis 5, **dadurch gekennzeichnet, dass** die längslaufenden Bänder (48) erste Ausnehmungen (52) aufweisen, die mit zweiten Ausnehmungen (54) zusammenwirken, die im Bereich der querlaufenden Bänder (50) vorgesehen sind.

7. Beschichtung für die Schallbehandlung nach einem der Ansprüche 2 bis 6, **dadurch gekennzeichnet, dass** sie einerseits erste Zellen (66) aufweist, die zur Führung von warmer Luft für die Behandlung von Vereisungen vorgesehen sind und die verkleinerte Querschnitte aufweisen, die von angenäherten Bändern (48, 50) begrenzt sind, und dass sie zweite Zellen (68) aufweist, die zur Schallbehandlung vorgesehen sind und die beträchtlichere Querschnitte aufweisen, die von Bändern (48, 50) gebildet sind, die in einem beträchtlicheren Abstand angeordnet sind als die die ersten Zellen begrenzenden Bänder (48, 50).

8. Beschichtung für die Schallbehandlung nach einem der vorhergehenden Ansprüche, **dadurch gekennzeichnet, dass** sie einen Hohlraum oder einen Kanal (70) aufweist, der an eine im Randbereich der Kammerstruktur angeordnete Zufuhr (40) von warmen Gas angeschlossen ist und der dazu eingerichtet ist, mit wenigstens einer zur Führung des warmen Gases vorgesehenen Zelle (68) in Verbindung zu stehen.

9. Anströmkante eines Luftfahrzeuges, die eine Beschichtung für die Schallbehandlung nach einem der vorhergehenden Ansprüche umfasst.

10. Lufteintritt einer Gondel eines Luftfahrzeuges, der eine Beschichtung für die Schallbehandlung nach einem der Ansprüche 1 bis 8 umfasst.
